# EUROPÄISCHE PATENTSCHRIFT

(11) **EP 2 835 207 B1**
(45) Veröffentlichungstag und Bekanntmachung des Hinweises auf die Patenterteilung: **02.10.2019**
(21) Anmeldenummer: 13179352.3
(22) Anmeldetag: 06.08.2013
(51) Int. Cl.: B23K 9/12, B23K 103/20, B23K 9/23

(54) **Verfahren zum Herstellen einer Schweißverbindung**
Method for manufacturing a welded connection
Procédé de fabrication d'une liaison soudée

(43) Veröffentlichungstag der Anmeldung: 11.02.2015
(73) Patentinhaber: MAGNA STEYR Fahrzeugtechnik AG & Co KG, 8041 Graz (AT)
(72) Erfinder: Karner, Werner, 8055 Graz (AT); Treven, Helmut, 8077 Gössendorf (AT)
(74) Vertreter: Zangger, Bernd

(56) Entgegenhaltungen:
- EP-A1- 0 288 884
- EP-A1- 0 534 704
- DE-A1- 3 909 620
- DE-A1-102011 012 939
- JP-A- 2003 211 270

## Beschreibung

### Gebiet der Erfindung

Die vorliegende Erfindung betrifft ein Verfahren zum Herstellen einer Schweißverbindung zwischen einem Stahlblech und einem Aluminiumblech, eine derart hergestellte Schweißverbindung und einen Bauteil mit einer solchen Schweißverbindung.

### Stand der Technik

Es sind bereits Verfahren zum Herstellen einer Schweißverbindung zwischen einem Stahlblech und einem Aluminiumblech bekannt. Insbesondere ist bekannt dass ein Stahlblech und ein Aluminiumblech mit Hilfe des Cold Metal Transfer (CMT) Verfahrens, entwickelt von der Firma Fronius, verschweißt werden können. Dazu werden das Stahlblech und das Aluminiumblech senkrecht aufgestellt und in der Position PG stehend und fallend von beiden Seiten mit jeweils einer Schweißanlage verschweißt. Die Stirnseite des Stahlbleches muss beim Schweißen verzinkt sein, so dass zuvor bereits verzinkte Stahlbleche nach einem Beschnitt im Schweißbereich an dieser Stelle nachträglich, vor dem Schweißen, nochmals verzinkt werden müssen.

Aus der DE 10 2011 012 939 A1 ist ein Verfahren zum Fügen zweier Bauteile bekannt, wobei ein erstes Bauteil aus Stahl mit einem zweiten Bauteil aus einer Aluminiumlegierung gefügt wird, wobei die beiden Bauteile auf Stoß durch Schweißlöten gefügt werden. Hierbei wird das Aluminiumbauteil im Fügebereich zunächst auf eine Temperatur oberhalb seines Schmelzpunktes erwärmt. Anschließend werden die zu verbindenden Bauteile in Kontakt miteinander gebracht.

Die JP 2003211270 A offenbart ein Verfahren zum Fügen von Stahl und Aluminium mit einem Fließmittel beinhaltenden Draht.

Die EP 0 288 884 A1, die als nächstliegender Stand der Technik gilt, offenbart ein Verfahren zum Verschweißen von stumpf gegeneinander gelegten Flanken von Metallblechen mittels einer vorzugsweise durch ein Laser-Schweißgerät bewirkten Schweißnaht, wobei die miteinander zu verschweißenden Bauteile in einem ersten Arbeitsgang an ihren zusammenzufügenden Flanken vermittels von Werkzeugen derart bearbeitet werden, dass diese ineinandergreifende, einander ergänzende Profile erhalten.

### Zusammenfassung der Erfindung

Es ist eine Aufgabe der Erfindung, ein Verfahren zum Herstellen einer Schweißverbindung zwischen einem Stahlblech und einem Aluminiumblech anzugeben, das einfach und kostengünstig ist und dabei eine feste Schweißverbindung erzeugt.

Die Lösung der Aufgabe erfolgt durch ein Verfahren gemäss Anspruch 1.

Erfindungsgemäß werden Stahlblech und Aluminiumblech also nur von einer Seite miteinander verschweißt, wodurch nur eine einzige Schweißvorrichtung benötigt wird. Dies wird für eine qualitativ gute Schweißverbindung dadurch ermöglicht, dass die Bleche horizontal, also liegend angeordnet werden und in der Schweißposition PA, also waagrecht verschweißt werden. Die Bleche sind in der horizontalen Position eingespannt. Dadurch wird es ermöglicht dass das Aluminiumblech und das Stahlblech bis an die Unterseite der beiden Bleche durchgedrückt werden. Erfindungsgemäß werden das Stahlblech und das Aluminiumblech zum Einspannen auf Blöcke aufgelegt, insbesondere auf Metallblöcke.

Die Blöcke weisen im Bereich der Schweißnaht einen Abstand von 5 - 50 mm auf.

Erfindungsgemäß werden das Stahlblech und das Aluminiumblech zum Einspannen auf deren Oberseite mit einer Spannvorrichtung niedergedrückt.

Die Spannvorrichtung ist so ausgebildet, dass sie Spannelemente umfasst die im Bereich der Schweißnaht einen minimalen Abstand von 2 - 40 mm aufweisen.

Erfindungsgemäß werden das Stahlblech und das Aluminiumblech in Beschnittbereichen miteinander verschweißt, wobei die Beschnittbereiche einseitige Schnittgrate aufweisen, wobei die Schnittgrate beim Verschweißen in entgegengesetzte Richtungen weisen. Die Beschnittbereiche können insbesondere durch Beschneiden der Metallbleche mittels Schlagscheren entstehen.

Erfindungsgemäß weist der Schnittgrat des Stahlbleches beim Verschweißen nach oben, also in Richtung zum Schweißbrenner.

Dadurch entsteht insbesondere eine beidseitige Schweißraupe, wobei die Schweißraupe im Wesentlichen aus geschmolzenem Aluminium gebildet ist.

Weiterbildungen der Erfindung sind in den abhängigen Ansprüchen, der Beschreibung sowie den beigefügten Zeichnungen angegeben.

Bevorzugt werden das Stahlblech und das Aluminiumblech im CMT-Verfahren (Cold Metal Transfer) oder CMT-Advanced-Verfahren miteinander verschweißt. Die Erfindung ist daher nicht auf Schweißverfahren mit Gleichstrom beschränkt, sondern kann beispielsweise auch mit Schweißverfahren die Wechselstrom oder pulsierenden Gleichstrom verwenden durchgeführt werden.

Bevorzugt werden das Stahlblech und das Aluminiumblech beim Einspannen im Stumpfstoß zueinander positioniert.

Bevorzugt ist die Oberfläche des Stahlbleches verzinkt. Das Zink kann als Flussmittel beim Schweißvorgang dienen. Auch andere Beschichtungen bzw. Oberflächen des Stahlbleches sind möglich, beispielsweise aluminisierte Stahlbleche.

Besonders bevorzugt wird das Stahlblech an einer Stahlstirnseite mit dem Aluminiumblech verschweißt, wobei das Stahlblech an der Stahlstirnseite keine Beschichtung, insbesondere keine Zinkschicht aufweist. Ein kostenintensives nachträgliches Anfräsen und Verzinken des Stahlbleches kann somit entfallen. Ebenso weist ein aluminisiertes Stahlblech an der Stahlstirnseite bevorzugt keine Aluminiumschicht auf.

Bevorzugt weisen die Blöcke im Bereich der Schweißnaht einen Abstand von 8 - 20 mm, weiter bevorzugt 8 - 10 mm auf.

Die Spannvorrichtung ist besonders bevorzugt so ausgebildet, dass sie Spannelemente umfasst die im Bereich der Schweißnaht einen minimalen Abstand von 5 - 12 mm, besonders bevorzugt 5 - 7 mm, noch weiter bevorzugt etwa 6 mm, aufweisen.

Besonders vorteilhaft ist, wenn der Abstand der Spannelemente im Bereich der Schweißnaht nach oben hin zunimmt, die Stirnseiten der Spannelemente verjüngen sich also zu den Blechen hin. Dadurch ist eine bessere Zugänglichkeit für einen Schweißbrenner gegeben.

Bevorzugt ist ein Schweißbrenner beim Schweißen relativ zur Senkrechten zum Aluminiumblech hin geneigt, insbesondere in einem Winkel von 0,5 - 10 Grad zur Senkrechten, vorzugsweise etwa 2-5 Grad zur Senkrechten.

Die Aufgabe wird auch gelöst durch eine Schweißverbindung zwischen einem Stahlblech und einem Aluminiumblech, wobei die Schweißverbindung nach einem erfindungsgemäßen Verfahren hergestellt ist.

Die Aufgabe wird auch gelöst durch ein Bauteil umfassend ein Stahlblech und ein Aluminiumblech, wobei das Stahlblech und das Aluminiumblech durch eine erfindungsgemäße Schweißverbindung verbunden sind.

### Kurzbeschreibung der Zeichnungen

Die Erfindung wird im Folgenden beispielhaft unter Bezugnahme auf die Zeichnungen beschrieben.
- Fig. 1 a,b,c: zeigen Schritte eines Verfahrens zum Herstellen einer Schweißverbindung das aus dem Stand der Technik bekannt ist.
- Fig. 2 a,b,c: zeigen Schritte eines erfindungsgemäßen Verfahrens zum Herstellen einer Schweißverbindung.
- Fig. 3: ist eine genauere schematische Ansicht des erfindungsgemäßen Verfahrensschrittes gemäß Fig. 2b.
- Fig. 4: ist eine schematische Ansicht der Beschnittbereiche der Bleche mit einseitigen Schnittgraten.

### Detaillierte Beschreibung der Erfindung

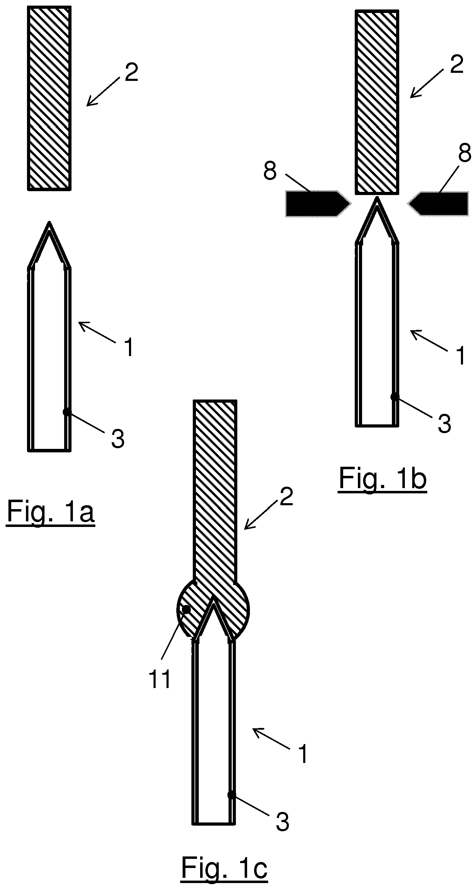

In Fig. 1 a, b und c sind Schritte eines Verfahrens zum Herstellen einer Schweißverbindung zwischen einem Stahlblech 1 und einem Aluminiumblech 2 das bereits bekannt ist. In diesem Verfahren werden die beiden Bleche 1, 2 senkrecht aufgestellt (Fig. 1a). Das Stahlblech ist rundum verzinkt, also sowohl an der Oberfläche 3 des Stahlbleches 1, als auch an der hier spitz dargestellten Stirnseite des Stahlbleches 1, die nach einem Beschnitt nachverzinkt wurde. Wie in Fig. lb dargestellt, wird auf beiden Seiten der künftigen Schweißnaht je eine Schweißmaschine, dargestellt als Schweißbrenner 8, verwendet und mit beiden Schweißbrennern 8 gleichzeitig in der Schweißposition PG geschweißt. Es entsteht, wie in Fig. 1c dargestellt, eine Hybridplatine aus Stahl und Aluminium mit einer beidseitigen Schweißraupe 11.

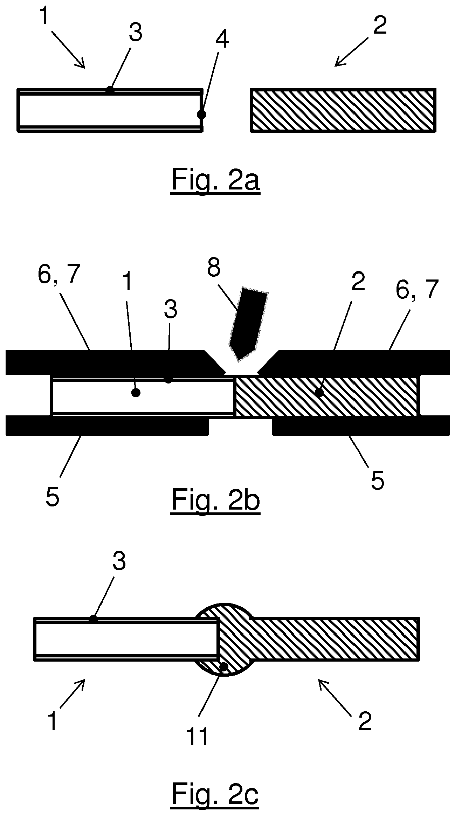

Das erfindungsgemäße Verfahren zum Herstellen einer Schweißverbindung zwischen einem Stahlblech 1 und einem Aluminiumblech 2, beispielsweise Al5xxx oder Al6xxx, ist in Fig. 2 a, b und c dargestellt. Das Stahlblech 1 wird mit dem Aluminiumblech 2 an einer Stahlstirnseite 4 verschweißt, die keine Zinkschicht aufweist, da ein Zuschnitt beispielsweise mit einer Schlagschere erfolgte. Die Oberfläche 3 des Stahlbleches 1 ist hingegen verzinkt, im Schweißnahtbereich möglichst kratzerfrei und mit Präzisionsreiniger gesäubert. Das Aluminiumblech 2 ist gebürstet und entfettet und ebenfalls mit Präzisionsreiniger gesäubert. Das Stahlblech 1 und das Aluminiumblech 2 werden horizontal eingespannt (Fig. 2b) und lediglich einseitig in der Schweißposition PA mit einem Schweißbrenner 8 im CMT (Cold Metal Transfer) Verfahren miteinander verschweißt. Beide Bleche werden auf Metallblöcke 5 aufgelegt, die voneinander beabstandet angeordnet sind. An der Oberseite werden die Bleche mit einer Spannvorrichtung 6 niedergedrückt. Die Spannvorrichtung 6 umfasst Spannelemente 7 die flächig an den beiden Blechen anliegen und andrücken. Diese Spannelemente 7 weisen im Bereich der künftigen Schweißnaht einen Abstand auf, so dass das Ansetzen des Schweißbrenners 8 ermöglicht wird. Durch das Verschweißen entsteht, wie in Fig. 2c dargestellt, eine beidseitige Schweißraupe 11, da die Stahl-Aluminium-Hybridplatte trotz einseitiger Brennerkonstellation komplett durchgeschweißt wird. Dabei wurde das Aluminium in schmelzflüssigen Zustand versetzt, der Stahl nicht. Das Zink wurde als Flussmittel genutzt.

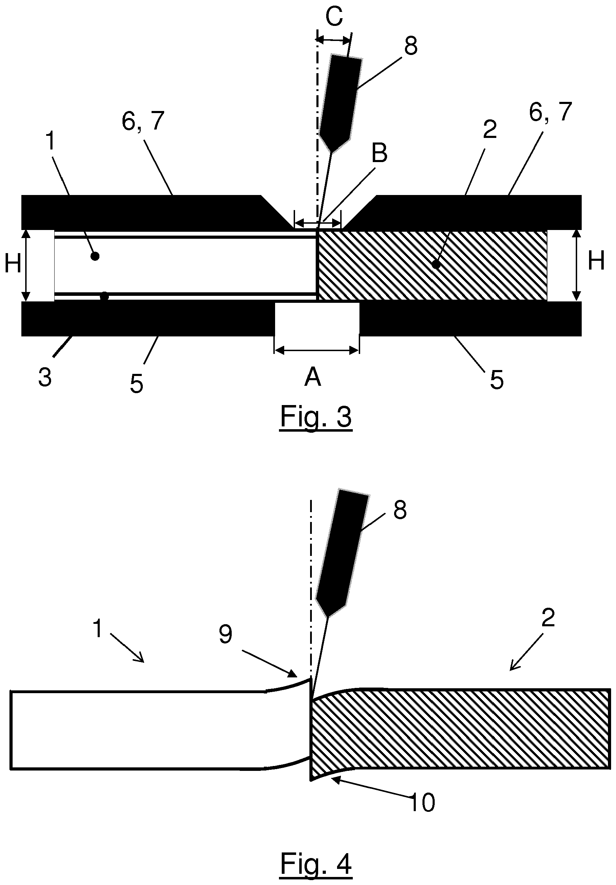

Fig. 3 ist eine genauere schematische Ansicht eines erfindungsgemäßen Schweißvorganges. Die Metallblöcke 5 weisen im Bereich der Schweißnaht einen Abstand A von 8 - 10 mm auf. Die Spannelemente 7 an der Oberseite der Bleche weisen einen Abstand B von mindestens 6 mm auf, der nach oben hin zunimmt. Der Schweißbrenner 8 verwendet das Schutzgas Argon 4.6-5.0 und wird in Schweißposition PA im Stumpfstoß mit einem Vorschub von 0,3-0,6 m/Min eingesetzt. Es wird 10-15 Grad stechend geschweißt. Der Schweißbrenner 8 ist in einem Winkel C von etwa 2-5 Grad zur Senkrechten zum Aluminiumblech 2 hin gekippt. Die Höhe H, beträgt sowohl beim Aluminiumblech 2 als auch beim Stahlblech 1, inklusive dessen Zinkschicht an der Oberfläche 3, etwa 0,8 - 4 mm, vorzugsweise 1,5 - 2 mm. Für die Zinkschicht wird beispielsweise Z100/100-Z350/350 oder ZE50/50-ZE100/100 verwendet. Als Schweißzusatz kann abhängig vom Aluminiumpartner beispielsweise verwendet werden: für A15xxx AlMg4,5MnZr, für Al6xxx AlSi3Mn1.

Aluminisierte Stahlbleche weisen eine dünne Aluminium-Schicht auf, beispielsweise im Bereich von 60 µm. Als Schweißzusätze können auch die oben genannten zur Anwendung kommen.

Fig. 4 ist eine schematische Ansicht der Beschnittbereiche der Bleche mit einseitigen Schnittgraten 9 und 10, die beim Schneiden mit einer Schlagschere entstanden. Die Schnittgrate 9, 10 weisen beim Verschweißen in entgegengesetzte Richtungen. Der Schnittgrat 9 des Stahlbleches 1 weist nach oben, zum Schweißbrenner 8.

### Bezugszeichenliste

- 1: Stahlblech
- 2: Aluminiumblech
- 3: Oberfläche des Stahlbleches
- 4: Stahlstirnseite
- 5: Block
- 6: Spannvorrichtung
- 7: Spannelement
- 8: Schweißbrenner
- 9: Schnittgrat des Stahlbleches
- 10: Schnittgrat des Aluminiumbleches
- 11: Schweißraupe

- A: Abstand der Blöcke
- B: Abstand der Spannelemente
- C: Winkel des Schweißbrenners zur Senkrechten
- H: Höhe

## Patentansprüche

1. Verfahren zum Herstellen einer Schweißverbindung zwischen einem Stahlblech und einem Aluminiumblech,
wobei das Stahlblech (1) und das Aluminiumblech (2) horizontal eingespannt werden und lediglich einseitig in der Schweißposition PA, also waagrecht, miteinander verschweißt werden, wobei das Stahlblech (1) und das Aluminiumblech (2) zum Einspannen auf Blöcke (5) aufgelegt werden, wobei das Stahlblech (1) und das Aluminiumblech (2) zum Einspannen auf deren Oberseite mit einer Spannvorrichtung (6) niedergedrückt werden, wobei das Stahlblech (1) und das Aluminiumblech (2) in Beschnittbereichen miteinander verschweißt werden, **dadurch gekennzeichnet, dass** die Beschnittbereiche einseitige Schnittgrate (9, 10) aufweisen, wobei die Schnittgrate (9, 10) beim Verschweißen in entgegengesetzte Richtungen weisen, wobei der Schnittgrat (9) des Stahlbleches (1) beim Verschweißen nach oben weist, wobei die Blöcke (5) im Bereich der Schweißnaht einen Abstand (A) von 8-10 mm aufweisen, wobei die Spannvorrichtung (6) so ausgebildet ist, dass sie Spannelemente (7) umfasst, die im Bereich der Schweißnaht einen Abstand (B) von 5-12 mm aufweisen.

2. Verfahren nach Anspruch 1,
**dadurch gekennzeichnet, dass** das Stahlblech (1) und das Aluminiumblech (2) im CMT-Verfahren oder CMT-Advanced-Verfahren miteinander verschweißt werden.

3. Verfahren nach Anspruch 1 oder 2,
**dadurch gekennzeichnet, dass** das Stahlblech (1) und das Aluminiumblech (2) beim Einspannen im Stumpfstoß zueinander positioniert werden.

4. Verfahren nach zumindest einem der zuvor genannten Ansprüche,
**dadurch gekennzeichnet, dass** die Oberfläche (3) des Stahlbleches (1) verzinkt ist oder es sich um ein aluminisiertes Stahlblech (1) handelt.

5. Verfahren nach zumindest einem der zuvor genannten Ansprüche,
**dadurch gekennzeichnet, dass** das Stahlblech (1) an einer Stahlstirnseite (4) mit dem Aluminiumblech (2) verschweißt wird, wobei das Stahlblech (1) an der Stahlstirnseite (4) keine Beschichtung, insbesondere keine Zinkschicht und keine Aluminiumschicht, aufweist.

6. Verfahren nach zumindest einem der zuvor genannten Ansprüche,
**dadurch gekennzeichnet, dass** die Spannvorrichtung (6) so ausgebildet ist, dass sie Spannelemente (7) umfasst, die im Bereich der Schweißnaht einen Abstand (B) von 5-7 mm besonders bevorzugt 6 mm, aufweisen.

7. Verfahren nach zumindest einem der zuvor genannten Ansprüche,
**dadurch gekennzeichnet, dass** der Abstand (B) der Spannelemente (7) im Bereich der Schweißnaht nach oben hin zunimmt.

8. Verfahren nach zumindest einem der zuvor genannten Ansprüche,
**dadurch gekennzeichnet, dass** ein Schweißbrenner (8) beim Schweißen relativ zur Senkrechten zum Stahlblech (1) hin geneigt ist, insbesondere in einem Winkel (C) von 0,5-10 Grad zur Senkrechten, vorzugsweise von etwa 2-5 Grad zur Senkrechten.

## Claims

1. Method for manufacturing a welded connection between a steel sheet and an aluminum sheet,
wherein the steel sheet (1) and the aluminum sheet (2) are clamped horizontally and are welded together on only one side in the welding position PA, i.e. horizontally, wherein, for the purpose of clamping, the steel sheet (1) and the aluminum sheet (2) are placed on blocks (5), wherein, for the purpose of clamping,
the steel sheet (1) and the aluminum sheet (2) are pressed down on the upper side thereof by means of a clamping device (6),
wherein the steel sheet (1) and the aluminum sheet (2) are welded together in trimming regions,
**characterized in that**
the trimming regions have cutting burrs (9, 10) on one side, wherein the cutting burrs (9, 10) point in opposite directions during the welding process, wherein the cutting burr (9) of the steel sheet (1) points upward during the welding process, wherein the blocks (5) have a spacing (A) of 8-10 mm in the region of the weld seam, wherein the clamping device (6) is designed in such a way that it comprises clamping elements (7) which have a spacing (B) of 5-12 mm in the region of the weld seam.

2. Method according to Claim 1,
**characterized in that**
the steel sheet (1) and the aluminum sheet (2) are welded together by the CMT process or Advanced CMT process.

3. Method according to Claim 1 or 2,
**characterized in that**
the steel sheet (1) and the aluminum sheet (2) are positioned to form a butt joint when clamping.

4. Method according to at least one of the preceding claims,
**characterized in that**
the surface (3) of the steel sheet (1) is zinc-coated or it is an aluminized steel sheet (1).

5. Method according to at least one of the preceding claims,
**characterized in that**
the steel sheet (1) is welded to the aluminum sheet (2) at a steel end face (4), wherein the steel sheet (1) has no coating, in particular no zinc layer and no aluminum layer, on the steel end face (4).

6. Method according to at least one of the preceding claims,
**characterized in that**
the clamping device (6) is designed in such a way that it comprises clamping elements (7) which have a spacing (B) of 5-7 mm, particularly preferably 6 mm, in the region of the weld seam.

7. Method according to at least one of the preceding claims,
**characterized in that**
the spacing (B) of the clamping elements (7) increases in an upward direction in the region of the weld seam.

8. Method according to at least one of the preceding claims,
**characterized in that**
a welding torch (8) slopes relative to the perpendicular to the steel sheet (1) during welding, in particular at an angle (C) of 0.5-10 degrees to the perpendicular, preferably of about 2-5 degrees to the perpendicular.

## Revendications

1. Procédé de fabrication d'une liaison soudée entre une tôle d'acier et une tôle d'aluminium,
la tôle d'acier (1) et la tôle d'aluminium (2) étant serrées horizontalement et soudées ensemble d'un seul côté dans la position de soudage PA, c'est-à-dire horizontalement, la tôle d'acier (1) et la tôle d'aluminium (2) étant placées sur des blocs (5) pour effectuer le serrage, la tôle d'acier (1) et la tôle d'aluminium (2) étant pressées sur leur face supérieure avec un dispositif de serrage (6) pour être serrées, la tôle d'acier (1) et la tôle d'aluminium (2) étant soudées l'une à l'autre dans des zones de coupe, **caractérisé en ce que** les zones de coupe comportent des bavures de coupe (9, 10) situées d'un seul côté, les bavures de coupe (9, 10) étant dirigées dans des directions opposées pendant le soudage, la bavure de coupe (9) de la tôle d'acier (1) étant dirigée vers le haut pendant le soudage, les blocs (5) présentant un espacement (A) de 8 à 10 mm dans la région du cordon de soudure, le dispositif de serrage (6) étant conçu de manière à comporter des éléments de serrage (7) qui présentent un espacement (B) de 5 à 12 mm dans la région du cordon de soudure.

2. Procédé selon la revendication 1, **caractérisé en ce que** la tôle d'acier (1) et la tôle d'aluminium (2) sont soudées ensemble dans le procédé CMT ou le procédé CMT Advanced.

3. Procédé selon la revendication 1 ou 2, **caractérisé en ce que** la tôle d'acier (1) et la tôle d'aluminium (2) sont positionnées l''une par rapport à l'autre de manière à abouter lors du serrage.

4. Procédé selon l'une au moins des revendications précédentes, **caractérisé en ce que** la surface (3) de la tôle d'acier (1) est galvanisée ou la tôle d'acier est une tôle d'acier aluminisée (1).

5. Procédé selon l'une au moins des revendications précédentes, **caractérisé en ce que** la tôle d'acier (1) est soudée à la tôle d'aluminium (2) au niveau d'une face frontale en acier (4), la tôle d'acier (1) ne comportant au niveau de la face d'extrémité en acier (4) aucun revêtement, en particulier aucune couche de zinc ni couche d'aluminium.

6. Procédé selon l'une au moins des revendications précédentes, **caractérisé en ce que** le dispositif de serrage (6) est conçu de manière à comporter des éléments de serrage (7) dans la région du cordon de soudure qui présentent un espacement (B) de 5 à 7 mm, de manière particulièrement préférée de 6 mm.

7. Procédé selon l'une au moins des revendications précédentes, **caractérisé en ce que** l'espacement (B) des éléments de serrage (7) dans la région du cordon de soudure augmente vers le haut.

8. Procédé selon l'une au moins des revendications précédentes, **caractérisé en ce qu'**un chalumeau de soudage (8) est incliné en cours de soudage par rapport à la verticale à la tôle d'acier (1), notamment d'un angle (C) de 0,5 à 10 degrés par rapport à la verticale, de préférence d'environ 2 à 5 degrés par rapport à la verticale.
